# EUROPÄISCHE PATENTANMELDUNG

(11) **EP 1 443 753 A1**
(43) Veröffentlichungstag der Anmeldung: **04.08.2004**
(21) Anmeldenummer: 03002264.4
(22) Anmeldetag: 01.02.2003
(51) Int. Cl.: H04N 5/225

(54) **An einem Schutzhelm anbringbare Einrichtung zur Verwendung bei der Innenraum-Brandbekämpfung**

(71) Anmelder: Active Photonics AG, Visualisierungs- und Kommunikationssysteme, 9500 Villach (AT)
(72) Erfinder: Paul, Christian, 9500 Villach (AT); Oberwalder, Herman, 9701 Rothenthurn (AT)
(74) Vertreter: Vinazzer, Edith, Dipl.-Ing.

(57) **Zusammenfassung**

Einrichtung, welche an einem Schutzhelm oder dergleichen anbringbar ist, zur Unterbringung einer Wärmebildkamera, einer Anzeigeeinrichtung oder dergleichen und zur Verwendung bei der Innenraum-Brandbekämpfung. Die Einrichtung weist zumindest ein vollständig geschlossenes, aus mehreren Formteilen bestehendes Gehäuse (1, 2) auf, dessen Wand in Schichtbauweise hergestellt ist und ein Substrat bzw. einen Träger (20) und außenseitig eine metallische Beschichtung (22) aufweist, und welches die untergebrachten Komponenten elektromagnetisch abschirmt.

## Beschreibung

Die Erfindung betrifft eine an einem Schutzhelm oder dergleichen anbringbare Einrichtung zur Unterbringung einer Wärmebildkamera, einer Anzeigeeinrichtung oder dergleichen und zur Verwendung bei der Innenraum-Brandbekämpfung.

Bei der Innenraum-Brandbekämpfung herrschen oft sehr raue Umgebungsbedingungen, welche die Feuerwehrmänner hohen Belastungen aussetzen: Durch die verrauchte, dunkle Umgebung herrscht oft sehr geringe Sicht, die durch das Feuer verursachten hohen Temperaturen erreichen unter Umständen kurzzeitig Spitzen bis zu 900°C, die Feuerwehrmänner sind durch das Gewicht ihrer Ausrüstung, welches bis zu 35 kg betragen kann, zusätzlich körperlich belastet, es besteht permanent Gefahr durch herabfallende Gegenstände, die Luftfeuchtigkeit ist durch die Brandbekämpfung relativ hoch und es kann eine hohe Explosionsgefahr bestehen. Die Innenraum-Brandbekämpfung ist daher auch eine der typischen Anwendungsfälle einer "Hands-Free"-Anwendung von Wärmebildkameras, die mit einer entsprechenden Anzeigeeinrichtung, die im Sehfeld des Feuerwehrmannes positioniert wird, gekoppelt ist. Die Wärmebildkamera und die Anzeigeeinrichtung werden üblicherweise am Schutzhelm montiert und sollen möglichst geschützt untergebracht sein.

Bekannte Anordnungen von Wärmebildkameras und Anzeigeeinrichtungen können den erwähnten Belastungen kaum standhalten. So ist es beispielsweise aus der US-A-6,023,288 bekannt, besondere Bauteile im Bereich der Wärmebildkamera vorzusehen, die einen gewissen Hitzeschutz und Schutz gegen herabfallende Gegenstände zur Verfügung zu stellen. Solche Maßnahmen haben sich in der Praxis als unzureichend erwiesen.

Die Erfindung hat sich daher zur Aufgabe gestellt, Wärmebildkameras und Anzeigeeinrichtungen derart unterbringen zu können, dass sie bei den zu erwartenden Betriebsbedingungen nicht beschädigt und in ihrer Funktion nicht beeinträchtigt werden.

Gelöst wird die gestellte Aufgabe erfindungsgemäß dadurch, dass die Einrichtung zumindest ein vollständig geschlossenes, aus mehreren Formteilen bestehendes Gehäuse aufweist, dessen Wand in Schichtbauweise hergestellt ist, welche ein Substrat bzw. einen Träger und außenseitig eine metallische Beschichtung aufweist, und welches die untergebrachten Komponenten elektromagnetisch abschirmt.

Ein erfindungsgemäß ausgeführtes Gehäuse besteht daher aus Formteilen mit einem besonderen Wandaufbau, welcher eine staub- und wasserdichte Unterbringung sicherstellt, eine hohe mechanische Festigkeit aufweist, schlag - und stoßfest ausführbar ist, die Elektronik der untergebrachten Einrichtungen elektromagnetisch abschirmt und vor Konvektions- und Strahlungswärme schützt sowie mit einem geringen Gewicht herstellbar ist.

Gemäß der Erfindung kann die Gehäusewand derart aufgebaut sein, dass sie sehr hohen Temperaturen standhalten kann. In diesem Zusammenhang ist es von Vorteil, wenn das Substrat bzw. der Träger eine aus einer Vielzahl von Kammern bestehende Struktur, beispielsweise eine Wabenstruktur, aufweist und bevorzugt aus einem geeigneten Kunststoffmaterial oder aus Aramid besteht.

Andere Ausführungen der Gehäusewand, die eher dazu geeignet sind, etwas niedrigeren Temperaturen stand zu halten, weisen ein Substrat bzw. einen Träger auf, welcher zumindest eine Schicht aus Kunststoffmaterial aufweist. Bevorzugt ist dabei eine Ausführung, bei der das Substrat bzw. der Träger einen PU-Körper umfasst.

Zusätzlich kann das Substrat bzw. der Träger zumindest einseitig, insbesondere jedoch beidseitig, mit einer Beschichtung aus in Kunststoff eingebetteten Fasern versehen sein, wobei bevorzugt ein Kohle- oder Glasfasergewebe in Frage kommt.

Die erfindungsgemäß vorgesehene elektromagnetische Abschirmung besteht bevorzugt aus zumindest einer Lage Abschirmfolie, die mit dem Substrat bzw. Träger auf einfache Weise durch Kleben verbunden sein kann und beispielsweise eine Kohlefaser- oder Aluminiumfolie ist.

Zusätzlich kann die Gehäusewand innenseitig mit einer Dämpfungsschicht versehen sein, die jedoch nicht mit dem sonstigen Wandaufbau verbunden sein muss. Von besonderem Vorteil ist dabei eine Ausführung, bei der die Dämpfungsschicht aus einem Schaumstoff, der entsprechend wärme- oder hitzebeständig ist, besteht und gleichzeitig derart vorgeformt ist, dass in dieser Dämpfungsschicht die im Gehäuse unterzubringenden Bauteile aufgenommen bzw. gehalten werden können.

Die äußere metallische Beschichtung der Gehäusewand besteht bei einer bevorzugten Ausführung aus mehreren, insbesondere aufgedampften metallischen Schichten, wobei die äußerste Schicht reflektierend ausgeführt wird. Die äußerste Schicht trägt daher ebenfalls zu einer wärme- bzw. hitzebeständigen Ausführung der Gehäusewand bei.

Für die Kamera bzw. die Anzeigeeinrichtung, die im Gehäuse untergebracht ist, wird die erfindungsgemäße Einrichtung mit einem transparenten Fenster einerseits zur Aufnahme andererseits zur Wiedergabe und Beobachtung durch den Benutzer versehen.

Eine bevorzugte Ausführungsform der Einrichtung sieht ein Gehäuse zur Unterbringung der Kamera und ein weiteres separates Gehäuse zur Unterbringung der Anzeigeeinrichtung vor, welche Gehäuse miteinander über Verbindungsbügel, die gelenkig mit jedem der Gehäuse verbunden sind, in Verbindung sind. Dabei bietet es sich an, im Inneren der Verbindungsbügel, die die Kamera mit der Anzeigeeinrichtung verbindenden Leitungen, Kabel oder dergleichen, unterzubringen und die Verbindungsbügel derart auszuführen, dass sie diese Komponenten elektromagnetisch abschirmen.

Weitere Merkmale, Vorteile und Einzelheiten der Erfindung werden anhand der Zeichnung, die mehrere Ausführungsbeispiele darstellt, näher beschrieben. Dabei zeigen
Fig. 1 eine Schrägansicht einer Ausführung eines erfindungsgemäß ausgeführten Kameragehäuses mit einem mit diesem verbundenen Gehäuse für eine Anzeigeeinrichtung,
Fig. 2 eine schematische Schnittdarstellung der Einrichtungen gemäß Fig. 1,
Fig. 3 den Aufbau einer Gehäusewand und
Fig. 4 bis 6 mögliche Ausführungen des Trägers bzw. Substrates einer Gehäusewand.

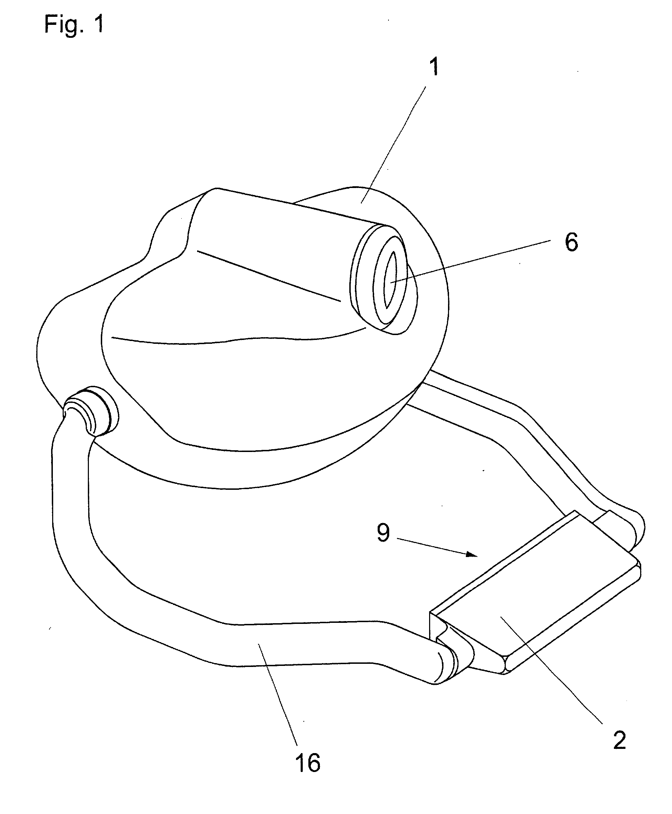

Fig. 1 zeigt eine mögliche Ausführung eines Gehäuses 1 für eine Wärmebildkamera und eines Gehäuses 2 für eine Anzeigeeinrichtung, wie sie bei der Innenraum-Brandbekämpfung zum Einsatz kommen können und am Schutzhelm des Feuerwehrmannes zu befestigen sind. Das die Kamera aufnehmende Gehäuse 1 und das die Anzeigeeinrichtung aufnehmende Gehäuse 2 sind vollständig geschlossen und bestehen beispielsweise aus zwei miteinander fest verbindbaren Gehäuseformteilen. Eines der Gehäuseformteile des Gehäuses 1 ist mit einem für Wärmestrahlung transparenten Fenster 6 für die im Gehäuse 1 untergebrachte Infrarotkamera versehen. Zwei seitlich am Gehäuse 1 angelenkte Verbindungsbügel 16 schaffen eine Verbindung zu der im Sichtfeld des Benützers positionierbaren Anzeigeeinrichtung bzw. dem die Anzeigeeinrichtung aufnehmenden Gehäuse 2. Das Gehäuse 2 ist mit einem in dieser Zeichnungsfigur nur angedeuteten Sichtfenster 9 versehen. Im Inneren der Verbindungsbügel 16 sind die erforderlichen elektrischen Leitungen zur elektrischen Verbindung der Kamera mit der Anzeigeeinrichtung untergebracht.

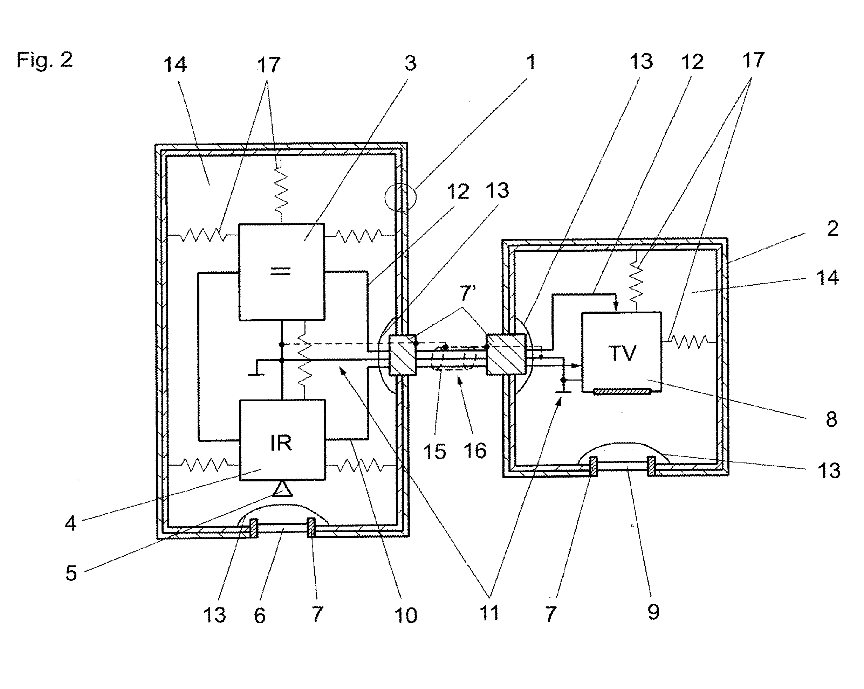

Fig. 2 zeigt schematisch die wesentlichen Bestandteile der in den hermetisch dichten Gehäusen 1 und 2 sowie in den Verbindungsbügeln 16 untergebrachten Einrichtungen. Dargestellt sind das IR-Fenster 6, das Sichtfenster 9 und die zwischen den jeweiligen Wänden der Gehäuse 1, 2 und den Fenstern 6, 9 vorgesehenen Dichtungen 7. Im Inneren des Gehäuses 1 sind die Bestandteile der Kamera untergebracht, wie ein hinter dem Fenster 6 positioniertes IR-Objektiv 5, ein Kameramodul 4, ein Netzteil 3 sowie die zur Spannungsversorgung vorgesehenen Leitungen bzw. Kabel 12. Die mit der Bezugsziffer 17 versehenen Teile veranschaulichen Halte- bzw. Positioniereinrichtungen für die einzelnen Kamerabestandteile und sind beispielsweise Schaumstoffteile, in welchen die Kamerabestandteile zumindest zum Teil eingebettet sein können.

Der dargestellte Verbindungsbügel 16 ist unter Verwendung von Dichtungen 7' sowohl am Gehäuse 1 als auch zum Gehäuse 2 angelenkt. Vom Kameramodul 4 und dem Netzteil 3 führen Kabel 10, 12 durch den Verbindungsbügel 16 zur Anzeigeeinrichtung 8 im Gehäuse 2. Die Anzeigeeinrichtung 8, beispielsweise eine Videoeinrichtung, wird im Gehäuse 2 ebenfalls durch Halte- bzw. Positioniereinrichtungen 17 gehalten. Gezeigt ist ferner das durch den Verbindungsbügel 16 verlaufende Massekabel 11. Sowohl die Verbindungsbügel 16 als auch die Wände der Gehäuse 1, 2 haben eine elektromagnetische Schirmwirkung, die Verbindungsbügel 16 durch den Einbau eines Drahtgeflechtes 15, die Gehäusewände durch ihren Aufbau, auf welchen weiter unten näher eingegangen wird. Elektrisch leitende Verbindungselemente 13, wie sie beispielsweise im Bereich der Fenster 6, 9 und der Anlenkstellen der Bügel 16 gezeigt sind, stellen die für die Schirmwirkung erforderlichen elektrischen Verbindungen her. Mit 14 ist jeweils der hermetisch dichte Raum im Inneren der Gehäuse 1, 2 bezeichnet.

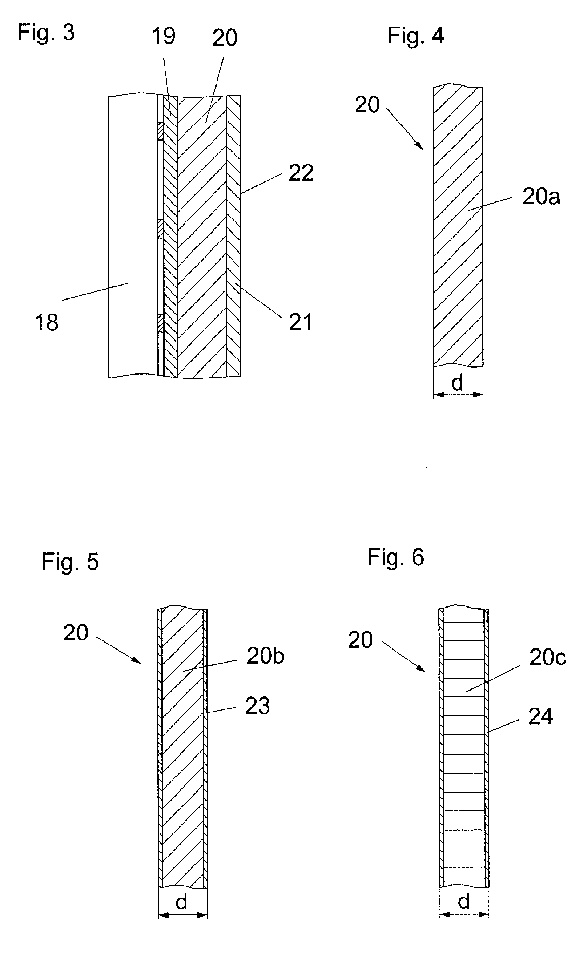

Einen bevorzugten Aufbau für die Wände der Gehäuse 1, 2 zeigt Fig. 3. Der dargestellte mehrschichtige Wandaufbau umfasst, von innen nach außen betrachtet, eine Dämpfungsschicht 18, eine Abschirmfolie 19, ein Substrat bzw. einen Träger 20, eine Haftvermittlungsschicht 21 und als äußerste Schicht eine metallische Beschichtung 22.

Die Dämpfungsschicht 18 besteht bevorzugt aus einem gegen Hitze beständigen Schaumstoff oder einem ähnlichen Material und kann gleichzeitig als Halte- bzw. Positioniereinrichtung 17 für die im Gehäuse 1, 2 untergebrachten Bestandteile, wie Kameramodul 4 und Anzeigeeinrichtung 8, ausgeführt sein. In diesem Fall wird die Dämpfungsschicht 18 vorzugsweise entsprechend vorgeformt, um die betreffenden Einrichtungen weitgehend formschlüssig aufnehmen zu können. Die Dämpfungsschicht 18 kann an der Innenseite der Abschirmfolie 19 anliegen oder mit dieser punktuell oder flächig, beispielsweise durch einen geeigneten Kleber, verbunden sein. Die Dämpfungssicht 18 ist zumindest im Bereich der Fenster 6, 9 unterbrochen. Die Abschirmfolie 19 dient zur elektromagnetischen Abschirmung der im Gehäuse 1, 2 untergebrachten Komponenten und kann aus Kohlefaser, Aluminium oder einem sonstigen geeigneten Material bestehen und ist mit dem Substrat bzw. dem Träger 20, beispielsweise durch Kleben, verbunden. Das Substrat bzw. der Träger 20 besteht vorzugsweise aus einem mit Kohlefaser oder Glasfaser verstärkten Kunststoff oder anderen Kunststoffmaterialien und ist außenseitig mit der Haftvermittlungsschicht 21 versehen, auf welcher die äußere Beschichtung 22 aufgebracht ist. Die metallische Beschichtung 22 besteht aus mehreren, insbesondere durch Aufdampfen aufgebrachten Metallschichten, von welchen die äußerste eine reflektierende Schicht ist. Als Beschichtungsmaterial kommen beispielsweise Gold, Chrom, Nickel oder andere Materialien in Frage. Die Dicke der Beschichtung beträgt zwischen 1 µm und mehreren µm, bis hin zu 100 µm.

An den jeweiligen Einsatzzweck besonders angepasste Ausführungen des Substrates bzw. Trägers 20 zeigen Fig. 4 bis 6. Fig. 4 und 5 sind dabei Niedrigtemperatur-Ausführungen, wobei in Fig. 4 das Substrat bzw. der Träger 20 lediglich aus einer Kunststoffschicht bzw. einem Kunststoffkörper 20a mit einer Dicke von beispielsweise 2 mm besteht. Fig. 5 zeigt eine Ausführung, bei der das Substrat bzw. der Träger 20 aus einer Kunststoffschicht, beispielsweise einem PU-Körper 20b, besteht, welcher beidseitig mit einer oder mehreren Lagen 23 aus von in Kunststoff eingebetteten Kohlefasern oder Glasfasern versehen ist.

Fig. 6 zeigt eine Hochtemperatur-Ausführung, bei der das Substrat bzw. der Träger 20 in Schichtbauweise hergestellt ist und aus einem Körper 20c mit einem kammerartigen Aufbau aus einem hitzebeständigen Material, insbesondere einer Wabenstruktur oder dergleichen, etwa aus Kunststoff oder Aramid, besteht, welche beidseitig beschichtet ist. Als Beschichtung 24 kommt beispielsweise ebenfalls in Kunststoff eingebettetes Kohlfaser- oder Glasfasergewebe in Frage. Gerade ein derartiger Aufbau des Substrates ist dafür geeignet, eine unterschiedliche Wärmeausdehnung bei Hitzebeanspruchung zumindest weitgehend zu verhindern.

Bei weiteren nicht dargestellten Ausführungsvarianten kann die Beschichtung des Substrates bzw. Trägers nur einseitig, insbesondere außenseitig, vorgesehen sein. Das Substrat bzw. der Träger kann ferner aus mehreren Lagen von in Kunststoff eingebetteten Fasern, insbesondere Glasfasern oder Kohlefasern, bestehen.

## Patentansprüche

1. Einrichtung, welche an einem Schutzhelm oder dergleichen anbringbar ist, zur Unterbringung einer Wärmebildkamera, einer Anzeigeeinrichtung oder dergleichen und zur Verwendung bei der Innenraum-Brandbekämpfung,
**dadurch gekennzeichnet,**
**dass** sie zumindest ein vollständig geschlossenes, aus mehreren Formteilen bestehendes Gehäuse (1, 2) aufweist, dessen Wand in Schichtbauweise hergestellt ist und ein Substrat bzw. einen Träger (20) und außenseitig eine metallische Beschichtung (22) aufweist, und welches die untergebrachten Komponenten elektromagnetisch abschirmt.

2. Einrichtung nach Anspruch 1, **dadurch gekennzeichnet, dass** das Substrat bzw. der Träger (20) eine aus einer Vielzahl von Kammern bestehende Struktur, beispielsweise eine Wabenstruktur, aufweist, welche vorzugsweise aus einem Kunststoffmaterial besteht.

3. Einrichtung nach Anspruch 1, **dadurch gekennzeichnet, dass** das Substrat bzw. der Träger (20) aus zumindest einer Schicht eines Kunststoffmaterials besteht oder eine solche aufweist.

4. Einrichtung nach Anspruch 1 oder 3, **dadurch gekennzeichnet, dass** das Substrat bzw. der Träger (20) einen PU-Körper aufweist.

5. Einrichtung nach Anspruch 1, **dadurch gekennzeichnet, dass** das Substrat bzw. der Träger aus mehreren Schichten von in Kunststoff eingebetteten Fasern besteht.

6. Einrichtung nach einem der Ansprüche 1 bis 5, **dadurch gekennzeichnet, dass** das Substrat bzw. der Träger (20) zumindest einseitig, insbesondere außenseitig, mit einer Beschichtung (23, 24) aus in Kunststoff eingebetteten Fasern versehen ist.

7. Einrichtung nach Anspruch 5 oder 6, **dadurch gekennzeichnet, dass** die Fasern Kohle- oder Glasfasern sind.

8. Einrichtung nach einem der Ansprüche 1 bis 7, **dadurch gekennzeichnet, dass** die Gehäusewand zur elektromagnetischen Abschirmung mit zumindest einer Lage einer Abschirmfolie (19), die mit dem Substrat bzw. Träger (20) vorzugsweise durch Kleben verbunden ist, aufweist.

9. Einrichtung nach Anspruch 8, **dadurch gekennzeichnet, dass** die Abschirmfolie (19) eine Kohlefaser- oder Aluminiumfolie ist.

10. Einrichtung nach einem der Ansprüche 1 bis 9, **dadurch gekennzeichnet, dass** an der Innenseite der Gehäusewand eine Dämpfungsschicht (18) angeordnet ist.

11. Einrichtung nach Anspruch 10, **dadurch gekennzeichnet, dass** die Dämpfungsschicht (18) aus einem Schaumstoff besteht.

12. Einrichtung nach Anspruch 10 oder 11, **dadurch gekennzeichnet, dass** die Dämpfungsschicht (18) zur, beispielsweise formschlüssigen, Aufnahme bzw. Positionierung der im Gehäuse (1 ,2) unterzubringenden Bauteile vorgesehen ist.

13. Einrichtung nach einem der Ansprüche 1 bis 12, **dadurch gekennzeichnet, dass** die äußere metallische Beschichtung (22) der Gehäusewand des Gehäuses (1, 2) aus mehreren, vorzugsweise aufgedampften, Schichten besteht, wobei die äußerste Schicht reflektierend ausgeführt ist.

14. Einrichtung nach einem der Ansprüche 1 bis 13, **dadurch gekennzeichnet, dass** das Gehäuse (1, 2) mit einem transparenten Fenster (6, 9) für die Kamera (4) bzw. die Anzeigeeinrichtung (8) versehen ist.

15. Einrichtung nach einem der Ansprüche 1 bis 14, **dadurch gekennzeichnet, dass** sie ein Gehäuse (1) zur Unterbringung der Kamera (4) und ein weiteres Gehäuse (2) zur Unterbringung der Anzeigeeinrichtung (8) aufweist, welche Gehäuse (1, 2) miteinander über Verbindungsbügel (16) gelenkig verbunden sind.

16. Einrichtung nach Anspruch 15, **dadurch gekennzeichnet, dass** im Inneren der Verbindungsbügel (16) die die Kamera (4) mit der Anzeigeeinrichtung (8) verbindenden Leitungen, Kabel oder dergleichen verlaufen, wobei die Verbindungsbügel (16) diese Komponenten elektromagnetisch abschirmen.
